# FASCICULE DE BREVET EUROPEEN

(11) **EP 3 126 546 B1**
(45) Date de publication et mention de la délivrance du brevet: **04.07.2018**
(21) Numéro de dépôt: 15723424.6
(22) Date de dépôt: 02.04.2015
(51) Int. Cl.: C25B 13/04, C25B 9/10, C25B 1/10, C25B 3/04, C25B 11/03, C25B 1/04

(54) **CELLULE ELECTROCHIMIQUE POUR L'ELECTROLYSE DE L'EAU LIQUIDE OU VAPEUR, PROCEDE DE FABRICATION ET UTILISATIONS**
ELEKTROCHEMISCHE ZELLE FÜR DIE ELEKTROLYSE VON FLÜSSIGEM WASSER ODER WASSERDAMPF, HERSTELLUNGSVERFAHREN UND ANWENDUNGEN
ELECTROCHEMICAL CELL FOR THE ELECTROLYSIS OF WATER IN STEAM OR LIQUID FORM, MANUFACTURING METHOD AND USES

(30) Priorité: 02.04.2014 EP 14001226
(43) Date de publication de la demande: 08.02.2017
(73) Titulaire: Sala, Beatrice, 34980 Saint Gely du Fesc (FR)
(72) Inventeur: Sala, Beatrice, 34980 Saint Gely du Fesc (FR)
(74) Mandataire: Delaveau, Sophie
(86) Numéro de dépôt international: PCT/EP2015/000719
(87) Numéro de publication internationale: WO 2015/149948

(56) Documents cités:
- US-A1- 2008 261 098
- US-A1- 2013 288 150

## Description

L'invention concerne principalement une cellule électrochimique pour l'électrolyse de l'eau liquide ou vapeur. L'invention porte également sur un procédé de fabrication d'une telle cellule ainsi que sur des applications possibles de cette cellule.

Les cellules électrochimiques utilisées notamment pour les électrolyseurs ou les piles à combustible à moyennes et hautes températures, comportent généralement un électrolyte solide pris en sandwich entre une anode et une cathode.

Les électrolytes solides connus sont réalisés à base d'oxydes ou d'hydroxydes qui, à la température d'utilisation de l'électrolyseur, se présentent sous la forme d'une céramique constituée de grains eux-mêmes constitués d'un réseau cristallin plus ou moins cristallisé capable de faciliter la migration de charges sous l'effet d'un champ électrique, lesquelles charges sont le plus souvent des lacunes ou des ions comme les protons. Pour ce faire, les électrolytes peuvent être plus ou moins dopés.

On connait quatre types d'électrolyseurs : les électrolyseurs utilisant un électrolyte liquide (potasse) fonctionnant entre 80 et 160°C, les électrolyseurs à électrolyte solide polymérique à conduction protonique fonctionnant entre 80 et 100°C, les électrolyseurs à électrolyte solide céramique à conduction anionique dont l'électrolyte est souvent de la zircone stabilisée à l'yttrium et qui fonctionnent entre 700 et 900°C et les électrolyseurs à électrolyte solide céramique perovskite à conduction protonique fonctionnant entre 500 et 650°C.

Il est connu que l'électrolyse d'eau permet la production d'hydrogène pouvant assurer la réduction de composés oxydés tels que le dioxyde de carbone.

La synthèse d'hydrogène peut être réalisée par un électrolyseur qui comprend des moyens d'introduction de la vapeur d'eau sous pression du côté de l'anode et des moyens d'introduction sous pression du gaz du côté de la cathode.

A cet effet, la publication FR2931168 décrit une cellule électrochimique dont l'électrolyte est fait d'une membrane en céramique conductrice de protons, notamment en matériau perovskite dopé.

L'utilisation d'une telle membrane nécessite une adaptation particulière des matériaux constituant les électrodes. En effet, l'utilisation de céramiques peut engendrer une fragilité mécanique de la cellule en raison des différences de coefficient de dilatation thermique entre la céramique et les électrodes.

C'est pourquoi les électrodes de la publication FR 2931168 sont réalisées en cermets, mélange de céramique et de métal, ou en céramique conductrice électronique. Mais la mise en forme de l'assemblage électrode/électrolyte/électrode est difficile en raison de la nécessité d'ajuster la quantité de métal par rapport à la poudre de céramique tout en maintenant une conductivité superficielle suffisante. En outre, les différences de coefficient de dilatation entraînent la formation de fissures après frittage. De plus, ces assemblages demandent à être brasés sur le corps de l'électrolyseur pour séparer les compartiments anodiques et cathodiques, ce brasage étant difficile et coûteux. Enfin, la configuration de la cellule de la publication FR2931168 ne peut être que plane ce qui exclut l'utilisation de cette cellule pour des applications nécessitant une adaptation géométrique particulière. US 2008/0261098 A1 et US 2013/0288150 A1 décrivent des cellules électrochimiques dont les électrolytes comprennent des aluminosilicates. Dans ce contexte, la présente invention vise une cellule électrochimique pour la réduction notamment de dioxyde de carbone, palliant les inconvénients précités.

La présente invention vise également une cellule électrochimique de configuration géométrique modulable.

Enfin, la présente invention vise un procédé de fabrication d'une telle cellule qui soit simple et peu coûteux.

A cet effet, l'invention concerne la cellule électrochimique de la revendication 1. La cellule électrochimique de l'invention peut également comporter les caractéristiques optionnelles suivantes considérées isolément ou selon toutes les combinaisons techniques possibles :
- l'anode métallique poreuse est un fritté d'alliage inoxydable comportant au moins 18% en poids de chrome.
- le fritté d'alliage inoxydable comporte du nickel et/ou du cobalt et/ou du fer.
- la cathode conductrice électronique poreuse est réalisée à base de métaux de transition ou de métaux choisis parmi les métaux des groupes IVB, VB, VIB, VIIB, VIIIB et IB, IIB ou de leur alliages.
- la cathode conductrice électronique poreuse comporte du palladium.
- la cathode conductrice électronique poreuse est réalisée à base de composés carbonés tel que du graphène, de nanotubes de carbone, ou d'un couplage de composés carbonés avec au moins des métaux de transition ou des métaux choisis parmi les métaux des groupes IVB, VB, VIB, VIIB, VIIIB et IB, IIB ou de leur alliages.
- les aluminosilicates sont sous forme de phyllosilicates tel que la dickite du groupe de la kaolinite et/ou le clinochlore du groupe de la chlorite, et/ou de zéolithes.
- la cellule est de configuration tubulaire.

L'invention porte également sur le procédé de fabrication de la revendication 9.

Le procédé de l'invention peut également comporter les caractéristiques optionnelles suivantes considérées isolément ou selon toutes les combinaisons techniques possibles :
- l'étape de fabrication de l'électrolyte et de dépôt du dit électrolyte sur l'anode est réalisée dans un autoclave sous pression de 1 à 100 bars et comprend les étapes de :
   - mélange de poudres comportant au moins de la silice et de l'alumine,
   - introduction d'une solution aqueuse dans l'autoclave, laquelle solution présente un caractère basique dont le pH est compris entre 8 et 10 par ajout de base telle que de l'ammoniaque, de l'éthanol amine ou de la morpholine,

   - introduction de l'anode en fritté d'alliage inoxydable dans l'autoclave,
   - introduction d'une cathode en métal noble,
   - montée en température de l'autoclave,
   - polarisation de l'anode et de la cathode en métal noble, ce dont il résulte une dissolution des poudres et le dépôt de ces poudres sur l'anode accéléré par la polarisation.
- des additifs choisis parmi des sels alcalins et/ou des composés alcalinoterreux sont ajoutés au mélange de silice et d'alumine, ainsi que des composés oxycarbonés comme le formaldéhyde, l'éthanol et /ou les acides carboxyliques.
- la montée en température de l'autoclave est réalisée jusqu'à une température comprise entre 300°C et 400° qui est maintenue pendant un temps compris entre 1 et 5000 heures.
- le dépôt de la cathode poreuse conductrice électronique est réalisé sur l'électrolyte préalablement déposé sur l'anode, par voie physique, par projection ou enduction d'un spray, par électrodéposition et/ou par dépôt chimique :
   - de métaux de transition ou de métaux choisis parmi les métaux des groupes IVB, VB, VIB, VIIB, VIIIB et IB, IIB ou de leur alliages, suivi d'un dépôt électrolytique ou chimique de cuivre.
   - de composés carbonés tel que du graphène, par exemple par enduction d'oxyde de graphène ultérieurement réduit par voie chimique, électrochimique ou physique, des nanotubes de carbone, ou d'un couplage de composés carbonés avec au moins un alliage de métaux de transition ou de métaux choisis parmi les métaux des groupes IVB, VB, VIB,VIIB,VIIIB,VIIIB et IB, IIB ou de leur alliages.

L'invention porte également sur une utilisation de la cellule précédemment décrite pour la réduction de composés oxydés, tels que des composés oxydés comme par exemple du dioxyde de carbone par les espèces chimiques réactives formées par électrolyse de l'eau, laquelle réduction est réalisée dans le compartiment cathodique entre 100 et 400°C, pour la production d'hydrogène dans le compartiment cathodique et/ou pour l'oxydation de composés réduits dans le compartiment anodique.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en coupe de la cellule électrochimique de l'invention,
- la figure 2 est une photographie prise au Microscope Electronique à Balayage de l'électrolyte en aluminosilicates après dépôt sur l'anode frittée, et
- la figure 3 est une photographie en coupe prise au Microscope Electronique à Balayage de l'électrolyte en aluminosilicates déposé sur l'anode frittée,
- la figure 4 est une photographie prise au Microscope Electronique à Balayage illustrant la formation de rosace de silice sur une anode dans un milieu silicaté, et
- la figure 5 est une photographie prise au Microscope Electronique à Balayage du dépôt électrolytique de la cathode en nickel sur l'électrolyte en aluminosilicates.

La cellule électrochimique de l'invention comporte un électrolyte minéral à base d'aluminosilicates qui est fabriqué et déposé par voie hydrothermale sur une anode faite d'un fritté métallique. La cathode faite d'un matériau poreux conducteur électronique est déposée ensuite sur l'électrolyte.

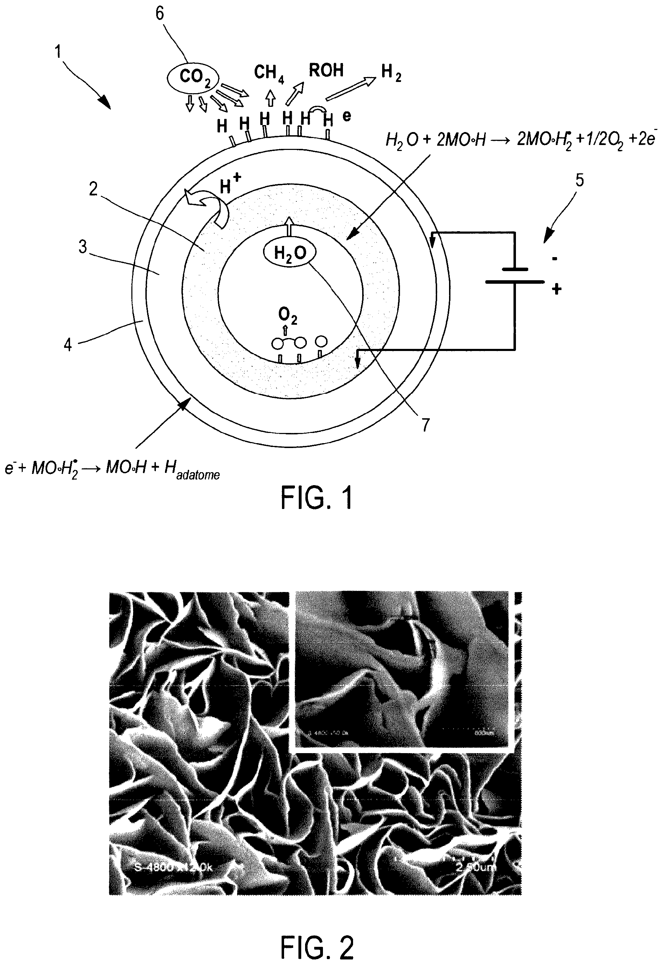

En référence à la figure 1, l'électrolyseur 1 de l'invention comprend une anode 2, un électrolyte en aluminosilicate 3, une cathode 4 et un générateur 5 qui génère un courant avec une différence de potentiel entre l'anode 2 et la cathode 4.

L'électrolyseur 1 comporte également des moyens 6 d'introduction de composés oxydés gazeux sous pression dans le compartiment cathodique 4 et des moyens 7 d'introduction de l'eau vapeur ou liquide sous pression dans le compartiment anodique 2.

L'eau est oxydée au niveau de l'anode 2 en libérant des électrons, en libérant de l'oxygène, et en formant des ions H⁺ qui migrent à travers l'électrolyte 3 jusqu'à la surface de la cathode 4 où ils sont réduits en adatomes H° qui réagissent avec les composés oxydés gazeux en formant des composés du type hydrocarbures comme le méthane et les alcools ROH. Ces adatomes H° peuvent également conduire à la formation d'hydrogène en s'appariant du côté cathodique 4.

Comme illustré sur la figure 1, l'électrolyseur 1 de l'invention peut présenter une forme tubulaire. Cette configuration tubulaire est avantageuse de par les larges surfaces d'échanges qu'elle engendre avec les composés oxydés gazeux du côté de la cathode et l'eau sous pression du côté de l'anode. Dans le cadre de la configuration tubulaire, on peut prévoir un assemblage de cellules électrochimiques tubulaires en série ou en parallèle sur une virole comparable à la géométrie des échangeurs thermiques.

L'électrolyseur 1 peut également être plan ou présenter toute autre configuration adaptée à son application.

L'utilisation d'aluminosilicates pour réaliser l'électrolyte 3 comporte de nombreux avantages.

En premier lieu, l'électrolyseur résultant 1 fonctionne à des températures comprises entre 100 et 400 °C. Ces températures moyennes permettent de limiter la corrosion des électrodes.

En outre, les aluminosilicates présentent de bonnes propriétés d'adhérence sur le métal, ce dont il résulte la possibilité d'utiliser une anode en métal non noble.

Par ailleurs, et comme il sera détaillé plus loin, l'aluminosilicate peut faire l'objet d'un dépôt sur l'anode, ce dont il résulte la possibilité d'utiliser tout type de configuration géométrique pour l'assemblage anode/électrolyte/cathode, c'est-à-dire le coeur de l'électrolyseur, et ainsi une adaptation générale de la configuration géométrique de l'électrolyseur à l'application qui lui est destinée.

Plus précisément, l'aluminosilicate constituant l'électrolyte est un aluminosilicate de type phyllosilicate et/ou zéolithe.

Ces deux structures ont l'avantage de présenter une conductivité qui évolue en fonction de la teneur en eau.

Plus précisément, les phyllosilicates sont faits de feuillets superposés constitués de couches de tétraèdres SiO₄ et de couches d'octaèdres Al(OH)₆ reliées par des atomes d'oxygène et des ions OH⁻ qui sont mis en commun. La présence d'ions Al³⁺ au lieu des ions Si⁴⁺ induit une charge négative au réseau. Cette charge négative de chaque feuillet est compensée par la charge de cations intercalaires tels que Fe²⁺, Al³⁺, Mg²⁺, Mn²⁺ ou Ni²⁺ qui sont hydroxylés, voire les protons H⁺, l'ensemble participant ainsi à la mobilité des protons.

Deux phyllosilicates particuliers sont préférentiellement formés, il s'agit de la dickite qui appartient au groupe des kaolinites et le clinochlore qui appartient au groupe des chlorites.

En variante, l'aluminosilicate peut être une zéolithe qui présente également une structure sous forme de cage composée d'ions Si⁴⁺ et d'ions Al³⁺ qui sont reliées par des atomes O et des ions OH⁻ qui sont mis en commun.

L'anode 2 est constitué d'un fritté d'alliage inoxydable comportant au moins 18% de chrome ainsi que du fer, du nickel et/ou du cobalt.

L'utilisation de tels matériaux pour réaliser l'anode est avantageux tant en terme de corrosion puisque ces alliages se corrodent très superficiellement, mais également pour assurer une bonne adhésion du dépôt d'aluminosilicate comme il sera détaillé plus loin.

La cathode 4 est constituée d'un dépôt poreux qui peut être est réalisé à base de métaux de transition ou de métaux choisis parmi les métaux des groupes IVB, VB, VIB,VIIB,VIIIB,VIIIB ou IB, IIB ou de leurs alliages. On préférera l'utilisation d'alliage de métaux de transition tel que le nickel et ses alliages, le cobalt et ses alliages ou les alliages de cuivre. Avantageusement, le dépôt poreux comporte également du palladium associé au cuivre qui est un bon catalyseur pour les réactions de réduction du dioxyde de carbone.

En variante, la cathode 4 est constituée de composés carbonés tels que des nanotubes de carbones ou du graphène, ou d'un couplage de composés carbonés avec au moins un alliage de métaux de transition ou de métaux choisis parmi les métaux des groupes IVB, VB, VIB,VIIB,VIIIB,VIIIB et IB, IIB ou de leur alliages.

On décrit ci-après un exemple non limitatif de procédé de fabrication de l'électrolyseur de l'invention.

La fabrication et le dépôt de l'électrolyte d'aluminosilicate sur l'anode faite en fritté métallique sont réalisés par voie hydrothermale. On entend par voie hydrothermale un milieu aqueux qui peut-être sous pression.

La première étape consiste à mélanger des poudres dans un autoclave désaéré. Le mélange de poudres comporte au moins de la silice et de l'alumine. Des additifs permettant de stabiliser les poudres et de neutraliser la surface de la silice peuvent être ajoutés. Ces additifs sont choisis parmi les sels alcalins (Na, K, Li, NH4+) et les alcalino terreux (Mg,Sr,Ca,Ba).

Une solution aqueuse alcaline de pH compris entre 8 et 10 est introduite dans l'autoclave. Cette solution basique est réalisée par ajout d'une base telle que l'ammoniaque, l'éthanol amine ou la morpholine. Le caractère alcalin de la solution permet de faciliter la dissolution de la silice et de l'alumine.

On introduit également dans l'autoclave des composés oxycarbonés complexant tels que du formaldéhyde, ou des acides carboxyliques. Les bases précédentes l'éthanol amine, de la morpholine ayant aussi un caractère complexant. Ces éléments favorisent la complexation des éléments métalliques constituant l'anode métallique, voire leur dissolution superficielle, et engendrent ainsi la formation d'aluminosilicates de ces éléments métalliques, ce qui permet d'obtenir une bonne adhérence des aluminosilicates sur l'anode. On observe alors sur la cellule 1 la présence d'une couche de diffusion des éléments métalliques constituant l'anode métallique poreuse 2 dans l'aluminosilicate.

On introduit également dans l'autoclave l'anode constituée d'un fritté d'alliage inoxydable tel que précédemment décrit. L'anode pourra être revêtue d'une couche de fer pour favoriser l'adhérence de l'électrolyte et pour augmenter l'épaisseur du dépôt de l'électrolyte par substitution de l'aluminium dans l'aluminosilicate.

On place dans le fond de l'autoclave une électrode de référence de type Ag/AgCl pour mesurer puis piloter le potentiel de l'anode.

L'atmosphère de l'autoclave est ensuite chauffée jusqu'à environ 300°C et la pression ajustée entre 1 et 100 bars. Les poudres se dissolvent jusqu'à 250°C puis précipitent vers 300°C. Au cours de la dissolution, l'aluminium se substitue au silicium en créant un réseau cristallin de charge négative dans lequel vont s'insérer les protons.

On peut améliorer la densification des aluminosilicates des éléments métalliques de l'anode et accélérer la fabrication et le dépôt des aluminosilicates sur l'anode par voie électrochimique.

Pour ce faire, on place également dans l'autoclave une cathode sous forme d'une grille de platine. Les électrodes sont alors polarisées dans la zone de stabilité de l'eau entre -600 et +800mV/ électrode à hydrogène, avec un écart de potentiel de 600 mV entre l'anode et la cathode.

De cette façon, la densification des aluminosilicates de l'anode augmente. On cherche à atteindre une densification de 90%. L'épaisseur de cette couche densifiée est optimisée en fonction de la chute ohmique désirée lors de l'utilisation de l'électrolyseur sous pression de vapeur d'eau ou d'eau liquide.

Il est à noter que si l'anode joue le rôle d'électrode à la fois lors de la fabrication de l'électrolyseur et lors de son utilisation, la cathode placée dans l'autoclave ne joue le rôle d'électrode que dans le cadre du dépôt de l'aluminosilicate sur l'anode.

Le temps pendant lequel l'atmosphère de l'autoclave est maintenue à 300°C varie entre 1 et 5000 heures. Lorsque l'on utilise la voie électrochimique qui vient d'être décrite, le temps de maintien de l'atmosphère de l'autoclave à 300°C sera fortement réduit. Au contraire, sans utiliser la voie électrochimique, le temps de maintien à 300°C pourra être de plusieurs centaines d'heures jusqu'à 5000 heures.

En variante, l'anode peut être préalablement immergée dans un sol-gel avant que soit procédé au dépôt des poudres par la voie hydrothermale précédemment décrite.

La photographie de la figure 2 montre le dépôt de l'électrolyte d'aluminosilicates greffé sur l'anode. Ce dépôt a été obtenu par une mélange de silice et d'alumine auxquels ont été ajoutés des additifs sous forme de phosphates de calcium et de carbonates de calcium pour stabiliser les poudres, ainsi que des amines, des acétates et des formiates pour améliorer l'adhérence des aluminosilicates sur l'anode.

Le dépôt des poudres sur l'anode est réalisé au potentiel libre pendant plusieurs centaines d'heures à une température de 250°C.

On constate sur cette figure l'aspect alvéolaire de l'électrolyte d'aluminosilicate.

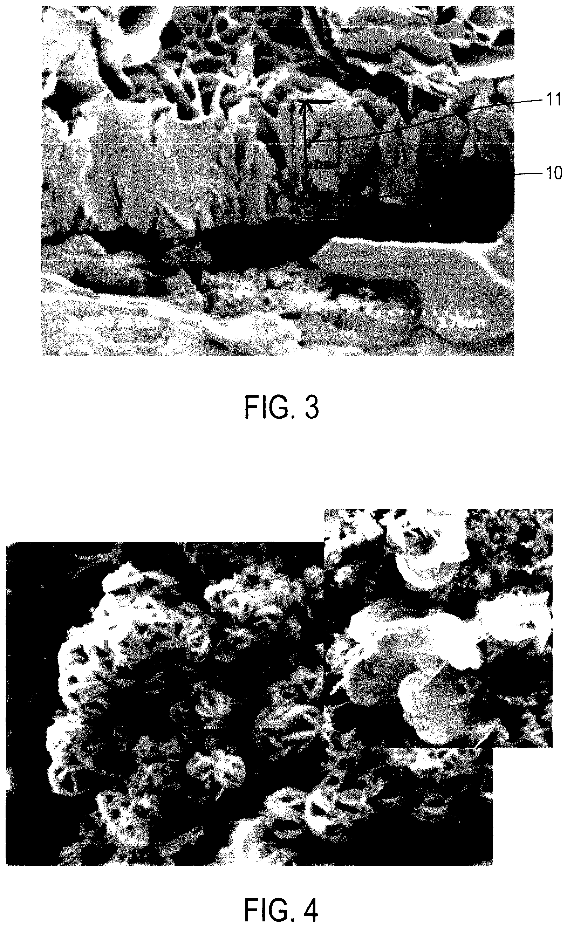

La figure 3 montre l'électrolyte d'aluminosilicate 3 en coupe comportant une partie dense 10 d'épaisseur d'environ 0,868 nanomètre en contact avec l'anode 2, et une partie alvéolaire 11 au potentiel libre.

L'accélération de la vitesse du dépôt peut être obtenue par polarisation galvanostatique et /ou potentiostatique de l'anode dès la température ordinaire comme le montre la figure 4 avec la formation de rosace de silice sur une anode dans un milieu silicaté et par application d'une différence de potentiel de 2 Volts entre l'anode et la cathode.

Une fois le dépôt de l'électrolyte 3 réalisé sur l'anode 2, l'ensemble est sorti de l'autoclave et on procède au dépôt de la cathode 4 précédemment décrite sur l'électrolyte 3.

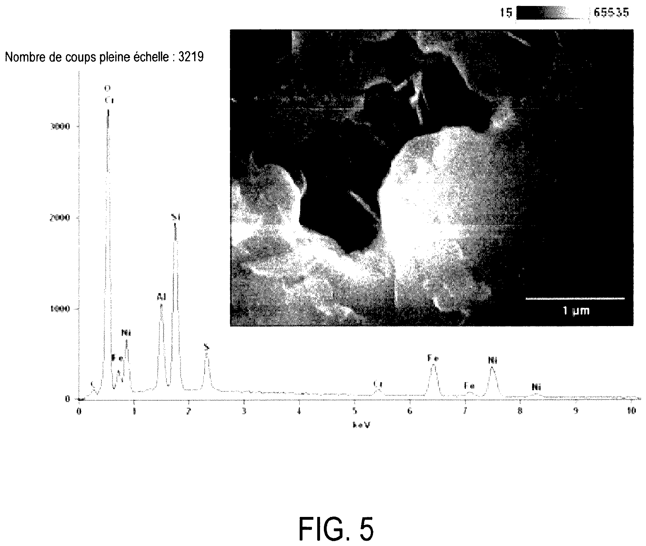

Quatre voies de dépôts sur la cathode ont été testées.
- un dépôt chimique de nickel avec une solution de Brenner (NiCl₂.6H₂O à 30g/l, NH₄Cl à 50g/l et (NH₄)₂HC₆H₅0₇ à 65g/l) suivi d'un dépôt électrolytique de cuivre ou d'un dépôt chimique de cuivre avec une solution composée de SnCl₂, CuSO₄, 5H₂O, du citrate de sodium et du formaldéhyde à pH 3.
- un dépôt électrolytique de nickel en milieu sulfamate ((NH₂SO₃)₂Ni à 300g/l et H₃BO₃ à 40g/l à pH 7 et une température de 60°C) en mode galvanostatique entre 0,05 et 100mA/cm². Ce dépôt peut être suivi d'un dépôt électrolytique de cuivre en milieu sulfate de cuivre. La figure 5 illustre à cet effet le dépôt nickel poreux obtenu par cette voie électrolytique sur la couche d'aluminosilicate. L'analyse dispersive en énergie (EDX) présentée sur cette même figure, caractérise la présence de nickel sur la couche d'aluminosilicate contenant du fer issu du support.
- dépôt sous vide au moyen d'un canon à électrons
- dépôt de graphène par enduction d'oxyde de graphène ultérieurement réduit par voie chimique, électrochimique ou physique.

Comme précisé plus haut, l'électrolyseur de l'invention est avantageusement utilisé à des températures de fonctionnement comprises entre 100 et 400°C. L'électrolyseur permet de produire de l'hydrogène ou de réduire par hydrogénation des composés oxydés tels que du dioxyde de carbone dans le compartiment cathodique.

## Revendications

1. Cellule électrochimique pour l'électrolyse de l'eau liquide ou vapeur **caractérisée en ce qu'**elle comprend un électrolyte minéral à conduction protonique (3) constitué d'aluminosilicates, pris en sandwich entre une anode métallique poreuse (2) et une cathode poreuse conductrice électronique (4), **en ce que** l'anode métallique poreuse (2) est un fritté métallique, et en que ladite cellule comporte une couche de diffusion des éléments métalliques constituant l'anode (2) dans l'électrolyte d'aluminosilicates (3), cette couche de diffusion étant formée d'aluminosilicates de ces éléments métalliques.

2. Cellule électrochimique selon la revendication 1, **caractérisée en ce que** l'anode métallique poreuse (2) est un fritté d'alliage inoxydable comportant au moins 18% en poids de chrome.

3. Cellule électrochimique selon la revendication 2, **caractérisée en ce que** le fritté d'alliage inoxydable comporte du nickel et/ou du cobalt et/ou du fer.

4. Cellule électrochimique selon l'une quelconque des revendications 1 à 3, **caractérisée en ce que** la cathode conductrice électronique poreuse (4) est réalisée à base de métaux de transition ou de métaux choisis parmi les métaux des groupes IVB, VB, VIB,VIIB, VIIIB et IB, IIB ou de leur alliages.

5. Cellule électrochimique selon la revendication 4, **caractérisée en ce que** la cathode conductrice électronique poreuse (4) comporte du palladium.

6. Cellule électrochimique selon l'une quelconque des revendications 1 à 3, **caractérisée en ce que** la cathode conductrice électronique poreuse (4) est réalisée à base de composés carbonés tel que du graphène, de nanotubes de carbone, ou d'un couplage de composés carbonés avec au moins des métaux de transition ou des métaux choisis parmi les métaux des groupes IVB, VB, VIB,VIIB, VIIIB et IB, IIB ou de leur alliages.

7. Cellule électrochimique selon l'une quelconque des revendications précédentes, **caractérisée en ce que** les aluminosilicates sont sous forme de phyllosilicates tel que la dickite du groupe de la kaolinite et/ou le clinochlore du groupe de la chlorite, et/ou de zéolithes.

8. Cellule électrochimique selon l'une quelconque des revendications précédentes, **caractérisée en ce qu'**elle est de configuration tubulaire.

9. Procédé de fabrication d'une cellule électrochimique selon l'une quelconque des revendications 1 à 9 comprenant au moins les étapes de
- fabrication de l'électrolyte à conduction protonique constituée d'aluminosilicates (3) et dépôt dudit électrolyte (3) sur l'anode métallique poreuse (2) faite d'un fritté métallique, la dite fabrication et ledit dépôt étant réalisés par voie hydrothermale, et
- dépôt de la cathode poreuse conductrice électrique (4) sur l'électrolyte (3) pour former la cellule électrochimique (1).

10. Procédé selon la revendication 9, **caractérisé en ce que** l'étape de fabrication de l'électrolyte (3) et de dépôt du dit électrolyte (3) sur l'anode (2) est réalisée dans un autoclave sous pression de 1 à 100 bars et comprend les étapes de :
- mélange de poudres comportant au moins de la silice et de l'alumine,
- introduction d'une solution aqueuse dans l'autoclave, laquelle solution présente un caractère basique dont le pH est compris entre 8 et 10 par ajout de base telle que de l'ammoniaque, de l'éthanol amine ou de la morpholine,
- introduction de l'anode (2) en fritté d'alliage inoxydable dans l'autoclave,
- introduction d'une cathode en métal noble,
- montée en température de l'autoclave,
- polarisation de l'anode (2) et de la cathode en métal noble, ce dont il résulte une dissolution des poudres et le dépôt de ces poudres sur l'anode (2) accéléré par la polarisation.

11. Procédé selon la revendication 10, **caractérisé en ce que** des additifs choisis parmi des sels alcalins et/ou des composés alcalinoterreux sont ajoutés au mélange de silice et d'alumine, ainsi que des composés oxycarbonés comme le formaldéhyde, l'éthanol et /ou les acides carboxyliques.

12. Procédé selon l'une quelconque des revendications 10 et 11, **caractérisé en ce que** la montée en température de l'autoclave est réalisée jusqu'à une température comprise entre 300°C et 400° qui est maintenue pendant un temps compris entre 1 et 5000 heures.

13. Procédé selon l'une quelconque des revendications 9 à 12, **caractérisé en ce que** le dépôt de la cathode poreuse conductrice électronique (4) est réalisé sur l'électrolyte (3) préalablement déposé sur l'anode (2), par voie physique, par projection ou enduction d'un spray, par électrodéposition et/ou par dépôt chimique :
- de métaux de transition ou de métaux choisis parmi les métaux des groupes IVB, VB, VIB,VIIB, VIIIB et IB, IIB ou de leur alliages, suivi d'un dépôt électrolytique ou chimique de cuivre.
- de composés carbonés tel que du graphène, par exemple par enduction d'oxyde de graphène ultérieurement réduit par voie chimique, électrochimique ou physique, des nanotubes de carbone, ou d'un couplage de composés carbonés avec au moins un alliage de métaux de transition ou de métaux choisis parmi les métaux des groupes IVB, VB, VIB,VIIB, ,VIIIB et IB, IIB ou de leur alliages.

14. Utilisation de la cellule électrochimique selon l'une quelconque des revendications 1 à 8 pour la réduction de composés oxydés, tels que des composés oxydés comportant par exemple du dioxyde de carbone, par les espèces chimiques réactives formées par électrolyse de l'eau, laquelle réduction est réalisée dans le compartiment cathodique entre 100 et 400°C, pour la production d'hydrogène dans le compartiment cathodique et/ou pour l'oxydation de composés réduits dans le compartiment anodique.

## Patentansprüche

1. Elektrochemische Zelle für die Elektrolyse von flüssigem Wasser oder Wasserdampf,
**dadurch gekennzeichnet, dass** diese einen mineralischen Elektrolyten (3) mit Protonenleitung, bestehend aus Aluminosilikaten, umfasst, sandwichartig angeordnet zwischen einer porösen metallischen Anode (2) und einer elektronisch leitenden porösen Kathode (4), dadurch, dass die poröse metallische Anode (2) ein metallisches Sintermaterial ist, und dadurch, dass die Zelle eine Diffusionsschicht metallischer Elemente, woraus die Anode (2) besteht, im Elektrolyten (3) aus Aluminosilikaten umfasst, wobei diese Diffusionsschicht aus Aluminosilikaten dieser metallischen Elemente gebildet ist.

2. Elektrochemische Zelle nach Anspruch 1,
**dadurch gekennzeichnet, dass** die poröse metallische Anode (2) ein Sintermaterial aus einer inoxidierbaren Legierung ist, die mindestens 18 Gew.-% Chrom umfasst.

3. Elektrochemische Zelle nach Anspruch 2,
**dadurch gekennzeichnet, dass** das Sintermaterial aus einer inoxidierbaren Legierung Nickel und/oder Kobalt und/oder Eisen umfasst.

4. Elektrochemische Zelle nach einem der Ansprüche 1 bis 3,
**dadurch gekennzeichnet, dass** die elektronisch leitende poröse Kathode (4) auf der Basis von Übergangsmetallen oder Metallen hergestellt ist, die aus den Metallen der Gruppen IVB, VB, VIB, VIIB, VIIIB und IB, IIB oder ihren Legierungen ausgewählt sind.

5. Elektrochemische Zelle nach Anspruch 4,
**dadurch gekennzeichnet, dass** die elektronisch leitende poröse Kathode (4) Palladium umfasst.

6. Elektrochemische Zelle nach einem der Ansprüche 1 bis 3,
**dadurch gekennzeichnet, dass** die elektronisch leitende poröse Kathode (4) auf der Basis von Kohlenstoffverbindungen, wie Graphen, Kohlenstoff-Nanoröhrchen, oder einer Kopplung von Kohlenstoffverbindungen mit mindestens Übergangsmetallen oder Metallen hergestellt ist, die aus den Metallen der Gruppen IVB, VB, VIB, VIIB, VIIIB und IB, IIB oder von ihrer Legierungen ausgewählt sind.

7. Elektrochemische Zelle nach einem der vorhergehenden Ansprüche,
**dadurch gekennzeichnet, dass** die Aluminosilikate in der Form von Phyllosilikaten, wie Dickit der Gruppe von Kaolinit und/oder Clinochlor der Gruppe von Chlorit, und/oder Zeolithen sind.

8. Elektrochemische Zelle nach einem der vorhergehenden Ansprüche,
**dadurch gekennzeichnet, dass** sie eine röhrchenförmige Auslegung aufweist.

9. Verfahren zur Herstellung einer elektrochemischen Zelle nach einem der Ansprüche 1 bis 9, umfassend mindestens die folgenden Schritte:
- Herstellen eines Elektrolyten (3) mit Protonenleitung, der aus Aluminosilikaten besteht, und Abscheiden des Elektrolyten (3) auf der porösen metallischen Anode (2), die aus einem metallischen Sintermaterial besteht, wobei die Herstellung und die Abscheidung auf hydrothermalem Weg durchgeführt werden, und
- Abscheiden der porösen elektrisch leitenden Kathode (4) auf dem Elektrolyten (3) zur Bildung der elektrochemischen Zelle (1).

10. Verfahren nach Anspruch 9,
**dadurch gekennzeichnet, dass** der Schritt der Herstellung des Elektrolyten (3) und der Abscheidung des Elektrolyten (3) auf der Anode (2) in einem Autoklav unter einem Druck von 1 bis 100 bar durchgeführt wird und die folgenden Schritte umfasst:
- Mischen von Pulvern, die mindestens Siliciumdioxid und Aluminiumoxid umfassen,
- Einbringen einer wässrigen Lösung in den Autoklav, wobei die Lösung eine basische Beschaffenheit aufweist, deren pH zwischen 8 und 10 liegt, indem eine Base, wie Ammoniak, Ethanolamin oder Morpholin zugesetzt wird,
- Einbringen der Anode (2) aus dem Sintermaterial aus einer inoxidierbaren Legierung in den Autoklav,
- Einbringen einer Kathode aus Edelmetall,
- Anheben der Temperatur des Autoklavs,
- Polarisieren der Anode (2) und der Kathode aus Edelmetall, um dadurch ein Lösen der Pulver und ein Abscheiden dieser Pulver auf der Anode (2) zu erhalten, die durch die Polarisation beschleunigt werden.

11. Verfahren nach Anspruch 10,
**dadurch gekennzeichnet, dass** Additive, die ausgewählt werden aus Alkalisalzen und/oder Erdalkaliverbindungen, der Mischung von Siliciumdioxid und Aluminiumoxid, sowie Oxycarbonverbindungen, wie Formaldehyd, Ethanol und/oder Carbonsäuren, zugesetzt werden.

12. Verfahren nach einem der Ansprüche 10 und 11,
**dadurch gekennzeichnet, dass** das Anheben der Temperatur des Autoklavs bis auf eine Temperatur zwischen 300°C und 400°C durchgeführt wird, die während einer Zeit zwischen 1 und 5000 Stunden aufrechterhalten wird.

13. Verfahren nach einem der Ansprüche 9 bis 12,
**dadurch gekennzeichnet, dass** die Abscheidung der elektronisch leitenden porösen Kathode (4) auf dem Elektrolyten (3), der zuvor auf der Anode (2) abgeschieden wurde, auf physikalischem Weg, durch Projektion oder Enduktion eines Sprays, durch Elektroabscheidung und/oder durch chemische Abscheidung der Folgenden durchgeführt wird:
- von Übergangsmetallen oder Metallen, die aus den Metallen der Gruppen IVB, VB, VIB, VIIB, VIIIB und IB, IIB oder ihren Legierungen ausgewählt werden, gefolgt von einer elektrolytischen oder chemischen Abscheidung von Kupfer,
- von Kohlenstoffverbindungen, wie Graphen, beispielsweise durch Enduktion von Graphenoxid, das anschließend auf chemischem, elektrochemischem oder physikalischem Weg reduziert wird, Kohlenstoff-Nanoröhrchen, oder einer Kopplung von Kohlenstoffverbindungen mit mindestens einer Legierung aus Übergangsmetallen oder Metallen, die aus den Metallen der Gruppen IVB, VB, VIB, VIIB, VIIIB und IB, IIB oder ihren Legierungen ausgewählt werden.

14. Verwendung der elektrochemischen Zelle nach einem der Ansprüche 1 bis 8 zur Reduktion von oxidierten Verbindungen, wie oxidierten Verbindungen, die beispielsweise Kohlendioxid umfassen, durch reaktive chemische Arten, die durch Elektrolyse von Wasser gebildet werden, wobei die Reduktion im Kathodenabteil zwischen 100 und 400°C durchgeführt wird, zur Herstellung von Wasserstoff im Kathodenabteil und/oder zur Oxidation von Verbindungen, die im Anodenabteil reduziert werden.

## Claims

1. Electrochemical cell for the electrolysis of water in the liquid or steam form, **characterized in that** it comprises a mineral electrolyte having proton conduction (3) consisting of aluminosilicates, sandwiched between a porous metal anode (2) and a porous electron-conductive cathode (4), **in that** the porous metal anode (2) is a sintered metal product and **in that** the said cell comprises a layer for diffusion of the metal elements constituting the anode (2) into the electrolyte of aluminosilicates (3), this diffusion layer being formed of aluminosilicates of these metal elements.

2. Electrochemical cell according to Claim 1, **characterized in that** the porous metal anode (2) is a sintered stainless alloy product comprising at least 18% by weight of chromium.

3. Electrochemical cell according to Claim 2, **characterized in that** the sintered stainless alloy product comprises nickel and/or cobalt and/or iron.

4. Electrochemical cell according to any one of Claims 1 to 3, **characterized in that** the porous electron-conductive cathode (4) is produced based on transition metals or on metals chosen from the metals of Groups IVb, Vb, VIb, VIIb, VIIIb and Ib, IIb or on their alloys.

5. Electrochemical cell according to Claim 4, **characterized in that** the porous electron-conductive cathode (4) comprises palladium.

6. Electrochemical cell according to any one of Claims 1 to 3, **characterized in that** the porous electron-conductive cathode (4) is produced based on carbon compounds, such as graphene or carbon nanotubes, or on a blend of carbon compounds with at least transition metals or metals chosen from the metals of Groups IVb, Vb, VIb, VIIb, VIIIb and Ib, IIb or on their alloys.

7. Electrochemical cell according to any one of the preceding claims, **characterized in that** the aluminosilicates are in the form of phyllosilicates, such as dickite of the kaolinite group and/or clinochlore of the chlorite group, and/or of zeolites.

8. Electrochemical cell according to any one of the preceding claims, **characterized in that** it is of tubular configuration.

9. Process for the manufacture of an electrochemical cell according to any one of Claims 1 to 9, comprising at least the stages of
- manufacture of the electrolyte having proton conduction (3) consisting of aluminosilicates and deposition of the said electrolyte (3) on the porous metal anode (2) made of a sintered metal product, the said manufacture and the said deposition being carried out by the hydrothermal route, and
- deposition of the porous electric-conductive cathode (4) on the electrolyte (3) in order to form the electrochemical cell (1).

10. Process according to Claim 9, **characterized in that** the stage of manufacture of the electrolyte (3) and of deposition of the said electrolyte (3) on the anode (2) is carried out in an autoclave under a pressure of 1 to 100 bar and comprises the stages of:
- mixing of powders comprising at least silica and alumina,
- introduction of an aqueous solution into the autoclave, which solution exhibits a basic nature, the pH of which is between 8 and 10, by addition of base, such as ammonia, ethanolamine or morpholine,
- introduction of the anode (2) made of sintered stainless alloy product into the autoclave,
- introduction of a cathode made of noble metal,
- rise in temperature of the autoclave,
- polarisation of the anode (2) and of the cathode made of noble metal, from which there results a dissolution of the powders and the deposition of these powders on the anode (2) accelerated by the polarisation.

11. Process according to Claim 10, **characterized in that** additives chosen from alkali metal salts and/or alkaline earth metal compounds are added to the mixture of silica and alumina, and also oxy-carbon compounds, such as formaldehyde, ethanol and/or carboxylic acids.

12. Process according to either one of Claims 10 and 11, **characterized in that** the rise in temperature of the autoclave is carried out up to a temperature of between 300°C and 400°C, which is maintained for a time of between 1 and 5000 hours.

13. Process according to any one of Claims 9 to 12, **characterized in that** the deposition of the porous electron-conductive cathode (4) is carried out on the electrolyte (3) deposited beforehand on the anode (2), by the physical route, by projection or coating with a spray, by electrodeposition and/or by chemical deposition:
- of transition metals or of metals chosen from the metals of Groups IVb, Vb, VIb, VIIb, VIIIb and Ib, IIb, or of their alloys, followed by an electrolytic or chemical deposition of copper,
- of carbon compounds, such as graphene, for example by coating with graphene oxide subsequently reduced by the chemical, electrochemical or physical route, or carbon nanotubes, or of a blend of carbon compounds with at least one alloy of transition metals or of metals chosen from the metals of Groups IVb, Vb, VIb, VIIb, VIIIb and Ib, IIb or of their alloys.

14. Use of the electrochemical cell according to any one of Claims 1 to 8 for the reduction of oxide compounds, such as oxide compounds comprising, for example, carbon dioxide, by the reactive chemical entities formed by the electrolysis of water, which reduction is carried out in the cathode compartment between 100°C and 400°C, for the production of hydrogen in the cathode compartment, and/or for the oxidation of reduced compounds in the anode compartment.
